(19) Europäisches Patentamt / European Patent Office / Office européen des brevets

(11) **EP 3 780 047 A1**

(12) **EUROPEAN PATENT APPLICATION**
published in accordance with Art. 153(4) EPC

(43) Date of publication:
**17.02.2021 Bulletin 2021/07**

(51) Int Cl.:
*H01G 9/055* (2006.01)   *H01G 9/035* (2006.01)
*H01G 9/145* (2006.01)

(21) Application number: **19780894.2**

(22) Date of filing: **29.03.2019**

(86) International application number:
**PCT/JP2019/013990**

(87) International publication number:
**WO 2019/194092 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2018 JP 2018071127**

(71) Applicant: **Nippon Chemi-Con Corporation Tokyo 141-8605 (JP)**

(72) Inventor: **YOSHIDA, Atsushi Tokyo 141-8605 (JP)**

(74) Representative: **AWA Sweden AB Junkersgatan 1 582 35 Linköping (SE)**

(54) **ELECTROLYTIC CAPACITOR**

(57)     By making the capacity retention rate to be high, an electrolyte capacitor with high capacitance in high frequency range is provided. In the electrolyte capacitor which includes an electrode foil and an electrode solution and which is used in the frequency range of 100 kHZ, a capacitance at 100 kHz is 50 % or more relative to a capacitance at 120 Hz.

*Fig. 1*

**Description**

TECHNICAL FIELD

The present disclosure relates to an electrolytic capacitor used in high frequency range.

BACKGROUND ART

The electrolytic capacitor is formed by impregnating a capacitor element with electrolyte, and the capacitor element is formed by facing an anode foil in which a dielectric film is formed on a valve metal foil such as aluminum and a cathode foil formed by a metal of same or different metal as that of the anode foil with a separator interposed therebetween.

The capacitance of electrolytic capacitor is proportional to the surface area of substrate and is inversely proportional to the thickness of dielectric film formed on the surface. Generally, an enlargement treatment such as etching, etc., is performed to the electrode foil of electrolytic capacitor, and a chemical treatment is performed on an enlarged portion where this enlargement treatment is performed, so that the dielectric film has large surface area. For the etching, electrochemical scheme is mainly used.

CITATION LIST

PATENT DOCUMENT

Japanese Laid-Open Publication: JP H09 - 148200

SUMMARY

PROBLEM TO BE SOLVED BY THE INVENTION

In recent years, electrolytic capacitor is largely used for digital devices which information processing in high frequency range that exceeds several ten kHz became common. Even in the high frequency range that exceeds several ten kHz, large capacitance is required for the electrolytic capacitor. In the high frequency range that exceeds several ten kHz, the capacitance of electrolytic capacitor decreases when compared with that in the low frequency range of 120 Hz. This phenomenon is caused by an etching pit length, and the responsiveness to the rapid switching operation gets worse in the deep portion of the pit, and in the high frequency range, it is considered that the whole pit does not contribute to the manifestation of the capacitance. Meanwhile, the capacitance of electrolytic capacitor is based on the capacitance measured in the low frequency range of 120 Hz according to 4.7 in JISC5101-1 (capacitance). Furthermore, a relative large and small relationship of capacitance in the plurality of electrolytic capacitor is considered to be constant in any frequency. For example, it is considered that the large and small relationship of capacitance in the plurality of electrolytic capacitor used in the high frequency range of 100 kHz and the large and small relationship of capacitance in the plurality of electrolytic capacitor used in the low frequency range of 120 Hz is the same.

The usage range of the electrolytic capacitor is not only the low frequency range, but has been expanded to the high frequency range that exceeds several ten kHz. The large capacitance is also required in the high frequency range, and larger capacitance is required for the electrolytic capacitor even in the high frequency range that exceeds several ten kHz.

The present disclosure addresses the above problem of the prior art, and the objective thereof is to provide an electrolytic capacitor having large capacitance in high frequency range.

MEANS FOR SOLVING THE PROBLEM

The inventors has well studied and discovered that, if an electrolyte capacitor which has smaller capacitance at 120Hz has the capacity retention rate of the capacitance at 100Hz relative to the capacitance at 120 HZ of 50 % or more, the quality of capacitance as the electrolyte capacitor is reversed when used in the frequency of several ten kHz or more so that the electrolyte capacitor would have large capacitance.

Accordingly, to achieve the above objective, an electrolyte capacitor according to the present disclosure is an electrolyte capacitor including an electrode foil and an electrolyte solution, in which a capacitance at 100 kHz is 50 % or more relative to a capacitance at 120 Hz.

The capacitance at 100kHz may be 65 % or more re relative to the capacitance at 120 Hz.

The electrolyte capacitor may be used in a frequency range of 100 kHz or more.

Furthermore, the electrolyte solution of the electrolyte capacitor may be mainly ethylene glycol In addition, the electrode foil may be an aluminum foil.

EFFECT OF INVENTION

According to the present disclosure, by making the capacity retention rate of the electrolyte capacitor from the low frequency range to the high frequency range, the large capacitance in the high frequency range can be achieved.

BRIEF DESCRIPTION OF DRAWINGS

[Fig. 1] Fig 1 is a graph illustrating the relationship between the frequency and the capacitance in each electrolyte capacitor in example 1.
[Fig. 2] Fig. 2 is a graph illustrating the relationship between the time elapsed and the expansion amount of the bottom of the casing in each electrolyte capacitor in example 2.
[Fig. 3] Fig. 3 a graph illustrating the relationship between the frequency and the ESR in each electrolyte capacitor in example 3.

PREFERRED EMBODIMENT OF INVENTION

Embodiments of the electrolyte capacitor according to the present disclosure will be described in detail in below. Note that the present disclosure is not limited to the embodiments described below.

(Electrolyte Capacitor)

A wound-type non-solid electrolyte capacitor, in which a capacitor element formed by winding an electrode foil is impregnated with an electrolyte solution, will be described as an example of electrolyte capacitor.
The capacitor element of the electrolyte capacitor includes an anode foil and a cathode foil, either or both of which are an electrode foil with a dielectric film, and is formed by winding these anode foil and cathode foil into a cylinder with a separator interposed therebetween and is impregnated with the electrolyte solution. An anode terminal and a cathode terminal are connected to the anode foil and the cathode foil, respectively, and are drawn out from the capacitor element. The anode terminal and the cathode terminal are connected to an outer terminal provided to a sealing body in which an elastic insulator such as rubber plate is pasted to a surface and a back surface of a hard substrate insulative plate such as a synthetic resin plate. Then, this capacitor element is housed in the outer case in a cylindrical shape with bottom, sealed with the sealing body, and the aging treatment is performed thereto to produce a wound-type capacitor.
The separator may be cellulose such as kraft, manila hemp, esparto, hemp, rayon, and mixed paper thereof, polyester resin such as polyethylene terephthalate, polybutylene terephthalate, polyethylene naphthalate, and derivatives thereof, polytetrafluoroethylene resin, polyvinylidene fluoride resin, vinylon resin, polyamide resin such as aliphatic polyamide, semi-aromatic polyamide, and aromatic polyamide, polyimide resin, polyethylene resin, polypropylene resin, trimethylpentene resin, polyphenyl sulfide resin, and acrylic resin, etc., and these resins may be used alone or in mixture.
A solvent of the electrolyte solution is not particularly limited, however, ethylene glycol is preferably used as the solvent of the electrolyte solution and may be used together with other solvent. Furthermore, for the solvent of the electrolyte solution, monohydric alcohol, polyhydric alcohol, and oxy alcohol compound may be cited as a protic organic polar solvent. Ethanol, propanol, butanol, pentanol, hexanol, cyclobutanol, cyclopentanol, cyclohexanol, and benzyl alcohol, etc., may be cited as the monohydric alcohol. $\gamma$-butyrolactone, diethylene glycol, dipropylene glycol, 1,2-propanediol, glycerine, 1,3-propanediol, 1,3-butanediol, and 2-methyl-2,4-pentanediolmay be cited as the polyhydric alcohol. Propylene glycol, glycerine, methyl cellosolve, ethyl cellosolve, methoxypropylene glycol, and dimethoxypropanol may be cited as the oxy alcohol compound.
Furthermore, amides, lactones, sulfolanes, cyclic amides, nitrils, and oxides may be cited as an aprotic organic polar solvent. N-methylformamide, N,N-dimethylformamide, N-ethylformamide, N,N-diethylformamide, N-methylacetamide, N,N-dimethylacetamide, N-ethylacetamide, N,N-diethylacetamide, and hexamethylphosphoric amide may be cited as the amides. $\gamma$-butyrolactone, N-methyl-2-pyrrolidone, ethylene carbonate, propylene carbonate, and isobutylene carbonate may be cited as the cyclic amides. Acetonitril, etc., may be cited as the nitrils. Dimethyl sulfoxide, etc., may be cited as the oxides.
Ammonium salt, amine salt, quaternary ammonium salt, and quaternary salt of cyclic amidine compound that are normally used for an electrolyte solution for driving the electrolyte capacitor and has a conjugate base of acid as the anion component may be cited for the solute of the electrolyte solution. Primary amines (methylamine, ethylamine, propylamine, butylamine, ethylenediamine, etc.), secondary amines (dimethylamine, diethylamine, dipropylamine, methylethylamine, diphenylamine, etc.), tertiary amines (trimethylamine, triethylamine, tripropylamine, triphenylamine, 1,8-bicyclo(5,4,0)-undecene-7, etc.) may be cited as the amines consisting the amine salt. Tetraalkylammonium (tetramethylammonium, tetraethylammonium, tetrapropylammonium, tetrabutylammonium, methyltriethylammonium, dimethyldiethylammonium, etc.), and pyridium (1-methyl pyridium, 1-ethyl pyridium, 1,3-diethyl pyridium, etc.) may be cited as the quaternary ammonium consisting the quaternary ammonium salt. Furthermore, the following quaternarized cations may be cited as the cations consisting the quaternary salt of the cyclic amidine compound. That is, imidazole monocyclic compound (imidazole homologues such as 1-methylimidazole, 1,3-dimethylimidazole, 1,4-dimethyl-2-ethylimidazole, and phenylimidazole, oxyalkyl derivatives such as 1-methyl-2-oxymethylimidazole and 1-methyl-2-oxyethylimidazole, nitro and amino derivatives such as 1-methyl-4(5)-nitroimidazole and 1,2-dimethyl-4(5)-nitroimidazole), benzoimidazole (1-methylimidazole, 1-methyl-2-benzylbenzoimidazole, etc.), compounds with 2-imidazoline ring (1-methylimidazoline, 1,2-dimethylimidazoline, 1,2,4-trimethylimidazoline, 1,4-dimethyl-2-ethylimidazoline, 1-methyl-2-phenylimidazoline, etc.), compounds with tetrahydropyrimidine ring (1-methyl-1,4,5,6-tetrahydropyrimidine, 1,2-dimethyl-1,4,5,6-tetrahydropyrimidine, 1,8-diazabicyclo[5.4.0]undecane-7,1,5-diazabicyclo[4.3.0]no nene etc.) may be cited. Conjugated base of acid such as carboxylic acid, phenols, boric acid, phosphoric acid, carbonic acid, and silicic acid may be exemplified as the anion component.

The electrolyte solution is liquid or gel. The gel electrolyte solution is, for example, an electrolyte gelated by adding gelation agent to the electrolyte solution. The gel electrolyte may be present inside the capacitor element in a state in contact with the dielectric and the anode foil by impregnating, for example, the capacitor element formed by winding the anode foil, the cathode foil, and the separator with the electrolyte solution containing the gelation agent to further proceed the gelation reaction.

(Electrode Foil)

The electrode foil that would be the anode foil and the cathode foil a foil body made of valve metal. The valve metal may be aluminum, tantalum, niobium, niobium oxide, titanium, hafnium, zirconium, zinc, tungsten, bismuth, and antimon, etc. The purity of the electrode foil is desirably 99.9 % or more for the anode foil and is desirably 99 % for the cathode foil, however, impurities such as silicon, iron, copper, magnesium, and zinc, etc., may be contained.

Both surfaces of the electrode foil are enlarged by the etching treatment. The enlarged electrode foil has a plurality of tunnel-shape etching pits dug in toward the center of thickness from the both surfaces of the electrode foil. The tunnel-shape etching pits are cylindrical holes, and the electrode foil has a remnant core portion where the etching pits do not reach. This tunnel-shape etching pits can be formed by chemical etching or electrochemical etching, and for example, formed by applying DC current to the electrode foil that is the anode foil in the acidic aqueous solution in which halogen ions are present. For example, the acidic aqueous solution may be hydrochloric acid, sulfuric acid, nitric acid, phosphoric acid, table salt, or mixtures thereof.

Furthermore, the dielectric film is formed on the electrode foil by the chemical treatment. The dielectric film is formed by oxidizing the surface of the electrode foil including the inner surface of the etching pit. This dielectric film is typically formed by applying the current to the electrode foil that is the anode foil in the buffer solution without halogen ions. An organic acid ammonium such as ammonium borate, ammonium phosphate, and ammonium adipate, etc., may be cited as the buffer solution.

In addition, the electrolyte capacitor of the present embodiment has a capacity retention rate of 50 % ore more, which is ratio of the capacitance at 100 kHz relative to the capacitance at 120 Hz. By making the capacity retention rate of the electrolyte capacitor to be 50 % or more, the capacitance in the frequency rate of several ten kHz or more would be relatively larger when compared with the electrolyte capacitor with the capacity retention rate of less than 50 %. That is, in the electrolyte capacitors in the same size, by making the capacity retention rate to be 50 % or more, capacitance which was smaller relative to the electrolyte capacitor with the capacity retention rate of less than 50 % in the low frequency range of 120 Hz, etc., would be reversed in the high frequency range. Moreover, the capacity retention rate of the electrolyte capacitor may be 65 % or more. By making the capacity retention rate to be 65 % or more, the generation of gas would be suppressed in the high frequency range of 100 kHz. The capacity retention rate may be changed by selecting the pit length, pit diameter, and pit number on the anode foil, the type of electrolyte solution, the type of electrode foil, and the type of the separator as appropriate. However, it is desirable to maintain the remnant core portion of the anode foil to have sufficient thickness to maintain the flexibility and the elasticity of the electrode foil.

(Examples) In the following characteristics comparison, the measurement of the capacity, the measurement of expansion amount of the bottom of the casing by the increase in inner pressure along with the generation of gas for each of the time elapsed, and the measurement of ESR are compared for 5 types of electrolyte capacitors with different capacity retention rate calculated from the capacity in the low frequency rate and the high frequency rate. In below, description will be given to examples in which frequency in the high frequency range is 100 kHz and frequency in the low frequency range is 120 Hz.

The capacity retention rate is the ratio of the capacitance measured at 100 kHz relative to the capacitance measured at 120 Hz, and is calculated by the following formula 1.
[Formula 1]

$$\frac{\text{Capacitance Measured in Frequency of 100 kHz}}{\text{Capacitance Measured in Frequency of 120 Hz}} \times 100 = \text{Capacity Retention Rate (\%)} \quad \cdots \quad (1)$$

Five types of electrolyte capacitor with different capacity retention rate were produced as examples 1 to 4 and comparative example 1.

| Table 1 | |
|---|---|
| | Capacity Retention Rate (%) |
| Example 1 | 85 |
| Example 2 | 65 |
| Example 3 | 60 |
| Example 4 | 50 |
| Comparative Example 1 | 40 |

As indicated in Table 1, the electrolyte capacitor with the capacity retention rate of 85 % was used in example 1, the electrolyte capacitor with the capacity retention rate of 65 % was used in example 2, the electrolyte capacitor with the capacity retention rate of 60 % was used in example 3, the electrolyte capacitor with the capacity retention rate of 50 % was used in example 4, and the electrolyte capacitor with the capacity retention rate of 40 % was used in comparative example 1. Each electrolyte capacitor with different capacity retention rate was produced by the following processes.

(Example 1) An electrolyte capacitor of example 1 was a wound-type capacitor with diameter of 35 mm × height of 50 mm. The anode foil, the cathode foil, and the separator used below were according to the size of the electrolyte capacitor. This anode foil was an aluminum foil to which two-stage etching treatment is performed. In the etching treatment, in the first process, aluminum foil was electrochemically etched by applying DC current in the aqueous solution including hydrochloric acid to form etching pits. In the second process, the aluminum foil was electrochemically or chemically etched by applying DC current in the aqueous solution including nitric acid to enlarge the already formed etching pits. The electrode foil on which the etching pits were formed was chemically treated by ammonium borate solution to form dielectric film on the surface thereof. A depth of the etching pit was measured by chemical treatment film replica method, and was 20 $\mu$m. Furthermore, the cathode foil was an aluminum foil with the length in accordance with the length of the anode foil and the thickness of approximately 20 $\mu$m. AC etching treatment was performed to the cathode foil, and spongy etching pits were formed on the surface thereof.

In example 1, the thickness of the anode foil was 55$\mu$m. An aluminum foil with the length of 3750 mm was used in accordance with the thickness of the electrode foil and the size of the casing. The length of the electrode foil depended on the thickness of the electrode foil. That is, when the inner diameter of the casing was constant, since the maximum diameter of the capacitor element to be inserted to said casing was constant, in the case the material forming the capacitor element was thick, the length of the material that could be wound would decrease when compared with the case in which the material was thin, and in the case the material forming the capacitor element was thin, the length of the material that could be wound would increase.

These anode foil and cathode foil was wound into cylindrical shape with the separator having the thickness of 60 $\mu$m interposed therebetween to form the capacitor element. This capacitor element was impregnated with the electrolyte solution which ethylene glycol had ethylene glycol as the main solvent. An anode terminal and a cathode terminal were connected to the anode foil and the cathode foil, respectively, and were drawn out from the capacitor element. The anode terminal and the cathode terminal were connected to an outer terminal provided to a sealing body in which an elastic insulator such as rubber plate was pasted to a surface and a back surface of a hard substrate insulative plate such as a synthetic resin plate. Then, this capacitor element was housed in the outer case in a cylindrical shape with bottom, was sealed with the sealing body, and the aging treatment was performed thereto to produce the electrolyte capacitor of example 1 which is a wound-type capacitor with diameter of 35 mm × height of 50 mm.

(Examples 2 to 4 and Comparative Example 1)

Electrolyte capacitors of examples 2 to 4 and comparative example 1 were wound-type capacitors with diameter of 35 mm × height of 50 mm similarly to example 1. In examples 2 to 4 and comparative example 1, the thickness, the length, and the depth of pits of the anode foil were adjusted according to values indicated in Table 2 to produce the electrolyte capacitors with different capacity retention rate. Table 2 was a table indicating the depth of pits, the thickness of electrode foil, the thickness of remnant core portion, and the length of electrode of examples 2 to 4 and comparative example 1.

| Table 2 | | | | |
|---|---|---|---|---|
| | Depth of Pit (μm) | Thickness of Electrode Foil (μm) | Thickness of Remnant Core Portion (μm) | Length of Electrode Foil (mm) |
| Example 1 | 20 | 55 | 15 | 3750 |
| Example 2 | 27 | 69 | 15 | 3500 |
| Example 3 | 33 | 81 | 15 | 3311 |
| Example 4 | 48 | 111 | 15 | 2917 |
| Comparative Example 1 | 55 | 125 | 15 | 2763 |

As indicated in Table 2, in the electrolyte capacitor of example 2, the thickness of the anode foil was 69 μm. The aluminum foil with the length of the electrode foil of 3500 mm was used in accordance with the thickness of the electrode foil and the size of the casing. The depth of the etching pits formed on the both surface of the anode foil was both 27 μm. In order to form the etching pits with the depth of 27 μm on both surface of the electrode foil with the thickness of 69 μm, the thickness of the remnant core portion where the etching pits were not formed was 15μm. In the electrolyte capacitor of example 3, the thickness of the anode foil was 81 μm. The aluminum foil with the length of the electrode foil of 3311 mm was used in accordance with the thickness of the electrode foil and the size of the casing. The depth of the etching pits formed on the both surface of the anode foil was both 33 μm. In the electrolyte capacitor of example 4, the thickness of the anode foil was 111 μm. The aluminum foil with the length of the electrode foil of 2917 mm was used in accordance with the thickness of the electrode foil and the size of the casing. The depth of the etching pits formed on the both surface of the anode foil was both 48 μm. In the electrolyte capacitor of comparative example 1, the thickness of the anode foil was 125 μm. The aluminum foil with the length of the electrode foil of 2763 mm was used in accordance with the thickness of the electrode foil and the size of the casing. The depth of the etching pits formed on the both surface of the anode foil was both 55 μm.

Furthermore, the cathode foil was an aluminum foil with the length in accordance with the length of the anode foil of examples 2 to 4 and comparative example 1, and with the thickness of approximately 20 μm which can be inserted into the casing with diameter of 35 mm × height of 50 mm. The electrolyte capacitors of examples 2 to 4 and comparative example 1 were produced by the same scheme and the same condition with the electrolyte capacitor of example except for the thickness, the length, and depth of pits of anode foil, the thickness and the length of cathode foil.

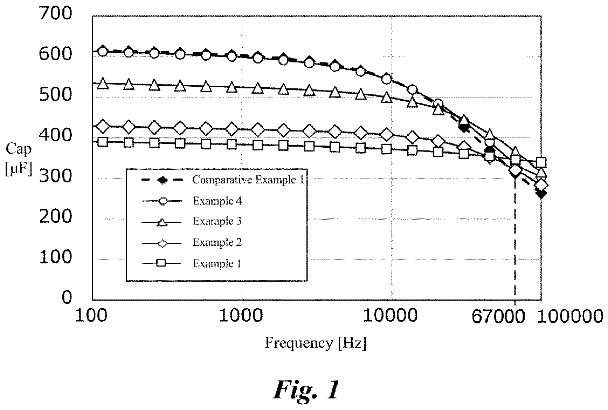

(Capacitance Measurement) The capacitance of the electrolyte capacitors of examples 1 to 4 and comparative example 1 were measured. LCR meter (from Agilent Technologies, 4284A) was used for the measurement. In the measurement, the ambient temperature was 20 °C, the AC voltage level was 0.5 Vrms or less, and the measurement frequency was in the range of 120 Hz to 100 kHz. The average values of results of three measurements of charging and capacitance at each frequency were plotted on the graph. The result was indicated in Fig. 1 and Table 3. Table 3 indicated the capacity retention rate, the depth of pits, and the capacitance of examples 1 to 4 and comparative example 1. The capacitance in Table 3 indicated values measured at 120 Hz and 100 kHz.

| Table 3 | | | Capacitance | |
|---|---|---|---|---|
| | Capacity Retention Rate (%) | Depth of Pit (μm) | 120Hz (μF) | 100kHz (μF) |
| Example 1 | 85 | 20 | 399 | 339 |
| Example 2 | 65 | 27 | 435 | 283 |

(continued)

| Table 3 | | | Capacitance | |
|---|---|---|---|---|
| | Capacity Retention Rate (%) | Depth of Pit ($\mu$m) | 120Hz ($\mu$F) | 100kHz ($\mu$F) |
| Example 3 | 60 | 33 | 526 | 316 |
| Example 4 | 50 | 48 | 606 | 303 |
| Comparative Example 1 | 40 | 55 | 658 | 263 |

As indicated in Table 3, in the electrolyte capacitor of comparative example 1, the capacitance at 120 Hz was 658 $\mu$F and the capacitance at 100 kHz was 263 $\mu$F. The value 658 $\mu$F for the capacitance at 120 Hz was the largest in examples 1 to 4 and comparative example 1. On the other hand, the value 263 $\mu$F for the capacitance at 100 kHz was the smallest in examples 1 to 4 and comparative example 1. Therefore, although the comparative example 1 has larger capacitance at 120 Hz even when compared with the example 4 with the capacity retention rate of 50 %, example 4 had larger capacitance at 100 kHz. That is, although examples 1 to 4 with the capacity retention rate of 50 % or more had smaller capacitance in the low frequency range relative to comparative example 1 with the capacity retention rate of less than 50 %, it reversed in the high frequency range.

In addition, from Fig. 1, for the capacitance at 120 Hz, the capacitance of comparative example was larger compared with the capacitance of examples 1 to 4. In the electrolyte capacitors of examples 1 to 4 and comparative example 1, the capacitance eventually decreased as the measurement frequency increases from 120 Hz to 10 kHz. The decreasing rate was large in example 4 and comparative example 1 in which the capacitance at 120 Hz was large and was small in examples 1 and 2 in which the capacitance at 120 Hz was small. However, the large and small relationship of the capacitance of examples 1 to 4 and comparative example 1 at 10 kHz was the same with the large and small relationship of the capacitance of examples 1 to 4 and comparative example 1 at 12 Hz. Then, the decreasing rate of the capacitance of comparative example 1 becomes larger as the measurement frequency becomes larger from 10 kHz. Furthermore, near 67 kHz that is the second plot from the right in Fig. 1, example 1 was approximately 346 $\mu$F, example 2 was approximately 321 $\mu$F, example 3 was approximately 365 $\mu$F, example 4 was approximately 336, $\mu$F, example 1 was approximately 312$\mu$F, and comparative example 1 was approximately 246 $\mu$F, and the capacitance of comparative example 1 had the smallest capacitance in examples 1 to 4 and comparative example 1. That is, comparative example 1, which had the largest capacitance in the frequency range of 120 Hz, had the smallest capacitance near the frequency range of 67 kHz. That is, the large and small relationship of the capacitance between examples 1 to 4 with the capacity retention rate of 50 % or more and comparative example with the capacity retention rate of less than 50 % was reversed near 67 kHz. Note that the capacitance near 67 kHz relative to the capacitance at 120 Hz was 87 % in example 1, 74 % in example 2, 69 % in example 3, 55 % in example 4, and 55 % in comparative example 1.

This reverse mechanism of the capacitance was assumed, although not limited, as below. That is, the capacitance of the electrolyte capacitor was determined by the specific surface area per unit surface are of substrate, the thickness of dielectric film, and the entire surface area of anode foil. The depth of etching pit where the dielectric fil, was formed and the diameter of pit would affect the surface area of dielectric film. That is, the surface area of dielectric film became larger as the etching pit became deeper, and the surface area of dielectric film became larger as the diameter of etching pit become larger. Examples 1 to 4 and comparative example 1 were produced with the same condition except for the depth of pit, and it was assumed that the pit diameters of etching pit were the same.

Accordingly, the surface area of the dielectric film of example 1 and comparative example 1 could be compared by comparing the depth of the pit of example 1 and comparative example 1. Since the depth of the pit of example 1 and comparative example 1 was 20 $\mu$m and 55 $\mu$m, respectively, and comparative example 1 was 2.75 times example 1, the surface area of the dielectric film of comparative example 1 was larger than the surface area of the dielectric film of example 1. When considering that comparative example 1 had large capacitance at 120 Hz, the surface area of dielectric film gave advantageous effect to the capacitance at 120 Hz, and on the other hand, gave disadvantageous effect to the capacity retention rate.

Meanwhile, the advantageous effect of the surface area of anode foil where dielectric film was formed to the capacitance was assumed. The length of the electrode foil of example 1 and comparative example 1 were 3750 mm and 2763 mm, respectively, and example 1 was 1.36 times comparative example 1. When considering that the capacity retention rate of example 1 was as large as 85 % and the difference of capacitance between at 120 Hz and 100 kHz was small, the advantageous effect that the capacitance can be maintained even at 110 kHz could be obtained. On the other hand, it was assumed that the effect given to the capacitance at 120 Hz was small.

That is, since the electrolyte capacitor with the capacity retention rate of less than 50 % had deeper etching pit, the surface of dielectric film was large and the capacitance at 120 Hz became large. However, at 100 kHz, the depth of pit were not effectively utilized, and since the length of electrode foil was short, high capacitance could not be maintained and the capacitance significantly decreased as getting closer to 100 kHz.

In contrast, since the electrolyte capacitor with the capacity retention rate of 50 % or more had shallower etching pit, the surface of dielectric film was small and the capacitance at 120 Hz was not high. On the other hand, since the shallow pit was effectively utilized at 120 Hz and the length of electrode foil was long, high capacitance could be maintained in the frequency range exceeding several ten kHz. As a result, it could be assumed that the capacitance of the electrolyte capacitor with the capacity retention rate of 50 % or more and the capacitance of the electrolyte capacitor with the capacity retention rate of less than 50 % was reversed. Furthermore, this reverse phenomenon started at least near 67 kHz as the lowest, and was significant at 100 kHz.

(2. Second Comparison of Characteristic) For the second comparison of characteristic, the measurement of gas produced for each time elapsed in the electrolyte capacitor of examples 1 to 4 and comparative example 1 were performed.

(Measurement of Gas Produced for each Time Elapsed)

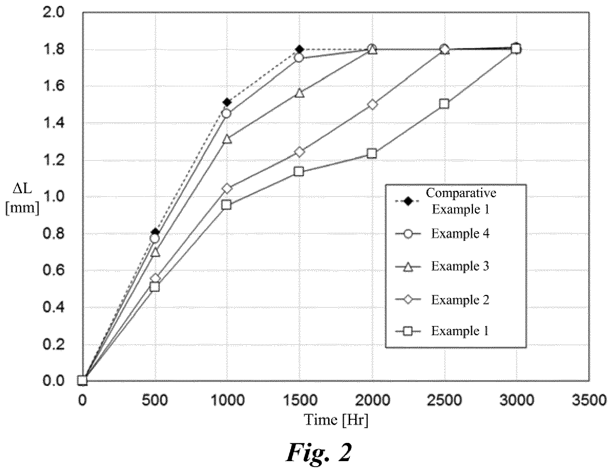

The measurement of gas produced in the electrolyte capacitor of examples 1 to 4 and comparative example 1 were performed based on the expansion amount of the bottom of the casing for each time elapsed and the operation time of the safety valve at the bottom of the casing. In the measurement, five electrolyte capacitors of examples 1 to 4 and comparative example 1 were prepared. The ripple current was applied so that the ripple frequency of 100 kHz, the ripple current of 4.4 Arms, and the peak of the applied voltage of 420 V were satisfied under the ambient temperature of 105 °C. Then, the expansion amount of the bottom of the casing for each time elapsed and the operation time of the safety valve at the bottom of the casing were measured. The result was indicated in Fig. 2 and Table 2. Fig. 2 indicated expansion amount of the bottom of the casing for each time elapsed of examples 1 to 4 and comparative example 1.

As indicated in Fig. 2, in the electrolyte capacitors of examples 1 to 4 and comparative example 1, the bottom of the casing eventually expanded by the gas produced inside as the time elapsed. For example, the expansion amount of the casing after 1000 hours had elapsed in comparative example 1 was approximately 1.5 mm, which was 1.5 times the examples 1 and 2.

Furthermore, after the 1500 hours of time had elapsed, the expansion of the casing reaches 1.8 mm in comparative example 1. The casing of the electrolyte capacitor in examples 1 to 4 and comparative example 1 did not expand beyond 1.8 mm due to the limitation for the shape of the bottom of the casing, etc. Therefore, after 1500 hours had elapsed, the force by the produced gas was applied in the direction to make the inner pressure of the electrolyte capacitor larger. From Fig. 2, it could be found that the time for the expansion amount of the bottom of the casing to reach 1.8 mm was 3000 hours in example 1, 2500 hours in example 2, 2000 hours in example 3, and 2000 hours in example 4. Table 4 indicates the capacity retention rate, the depth of pit, and the time and number of the operated safety valve on the bottom of the casing in examples 1 to 4 and comparative example 1.

| Table 4 | | | | | | | | | | |
|---|---|---|---|---|---|---|---|---|---|---|
| | Capacity Retention Rate (%) | Depth of Pit ($\mu$m) | Time Elapsed (h) | | | | | | | |
| | | | 0 | 500 | 1000 | 1500 | 2000 | 2500 | 3000 | 3500 |
| Example 1 | 85 | 20 | | | | | | | | |
| Example 2 | 65 | 27 | | | | | | | | |
| Example 3 | 60 | 33 | | | | | | | 1/5 | 4/5 |
| Example 4 | 50 | 48 | | | | | | | 5/5 | |
| Comparative Example 1 | 40 | 55 | | | | | | 2/5 | 3/5 | |

As indicated in Table 4, in the electrolyte capacitor, after 1000 hours when the expansion of the bottom of the casing reached 1.8 mm, the pressure inside the electrolyte capacitor becomes larger than the operation pressure of the safety valve on the bottom of the casing, and the safety valve was operated. That is, in comparative example 1, two electrolyte capacitors among five electrolyte capacitors operated the safety valve after 2500 hours had elapsed, and the remaining three electrolyte capacitors had operated the safety valve after 3000 hours had elapsed. Furthermore, in example 4, all five electrolyte capacitors operated the safety valve after 3000 hours had elapsed. In example 3, one electrolyte capacitor among five electrolyte capacitors operated the safety valve after 3000 hours had elapsed, and the remaining four electrolyte capacitors had operated the safety valve after 3500 hours had elapsed. On the other hand, in examples 1 and 2, the electrolyte capacitors did not operate the safety valve at less than 3500 hours had elapsed.

Accordingly, in the electrolyte capacitor in which the capacitance at 110 kHz relative to the capacitance at 120 Hz was 65 %, it was confirmed to have high reliability against the deterioration over time.

(3. Third Comparison of Characteristic) In the third comparison of characteristic, ESR at 120 Hz to 100 kHz in each electrolyte capacitor of examples 1 to 4 and comparative example 1 was measured.

(ESR Measurement)

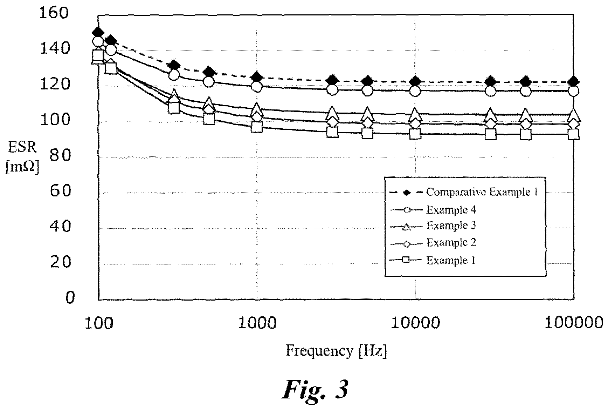

ESR of the electrolyte capacitor of examples 1 to 4 and comparative example 1 was measured. The ESR measurement was performed in the same condition as the first comparison of characteristic. That is, the ambient temperature was 20 °C, the AC voltage level was 0.5 Vrms or less, and the measurement frequency was in the range of 120 Hz to 100 kHz. The average values of results of three measurements of charging and capacitance at each frequency were plotted on the graph having frequency in vertical axis and capacitance in horizontal axis. The result was indicated on Fig. 3.

As illustrated in Fig. 3, in examples 1 to 4 and comparative example 1, ESR at 120 Hz was approximately 140 mΩ, and ESR at 100 kHz was 90 mΩ in example 1, 90 mΩ in example 2, 100 mΩ in example 3, 120 mΩ in example 4, and 120 mΩ in comparative example 1. That is, with the capacity retention rate of 60 % or more, it was confirmed that ESR at 100 kHz would be small. Therefore, from the viewpoint of ESR at 100 kHz, it was confirmed that he capacity retention rate of 60 % or more was desirable.

If the ESR of the capacitor can be set small, the heat generation when the ripple current was applied would be suppressed, and the capacitor with low loss and long lifetime against the ripple current application in the high frequency range can be designed.

**Claims**

1. An electrolyte capacitor comprising an electrode foil and an electrolyte solution,
   wherein a capacitance at 100 kHz is 50 % or more relative to a capacitance at 120 Hz.

2. The electrolyte capacitor according to claim 1, wherein the capacitance at 100kHz is 65 % or more re relative to the capacitance at 120 Hz.

3. The electrolyte capacitor according to claim 1 and 2, wherein the electrolyte capacitor is used in a frequency range of 100 kHz or more.

4. The electrolyte capacitor according to any one of claims 1 to 3, wherein the electrolyte solution of the electrolyte capacitor is mainly ethylene glycol.

5. The electrolyte capacitor according to any one of claims 1 to 4, wherein the electrode foil is an aluminum foil.

*Fig. 1*

*Fig. 2*

*Fig. 3*

## INTERNATIONAL SEARCH REPORT

| International application No. |
| --- |
| PCT/JP2019/013990 |

A. CLASSIFICATION OF SUBJECT MATTER
Int.Cl. H01G9/055(2006.01)i, H01G9/035(2006.01)i, H01G9/145(2006.01)i

According to International Patent Classification (IPC) or to both national classification and IPC

B. FIELDS SEARCHED

Minimum documentation searched (classification system followed by classification symbols)
Int.Cl. H01G9/055, H01G9/035, H01G9/145

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2000-340462 A (MATSUSHITA ELECTRIC INDUSTRIAL CO., LTD.) 08 December 2000, claims, paragraphs [0019], [0042], table 2 (Family: none) | 1-5 |
| A | JP 2000-021686 A (MATSUSHITA ELECTRIC INDUSTRIAL CO., LTD.) 21 January 2000, table 1 & US 6224639 B1, table 1 & EP 974988 A2 | 1-5 |
| A | JP 2017-103412 A (TOKIN CORPORATION) 08 June 2017, fig. 3, 4 & US 2017/0162336 A1, fig. 3, 4 & CN 106910633 A | 1-5 |

☐ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 05 June 2019 (05.06.2019) | 18 June 2019 (18.06.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**EP 3 780 047 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09148200 B